# FASCICULE DE BREVET EUROPEEN

(11) **EP 3 330 125 B1**
(45) Date de publication et mention de la délivrance du brevet: **12.05.2021**
(21) Numéro de dépôt: 17203927.3
(22) Date de dépôt: 27.11.2017
(51) Int. Cl.: B60N 2/70, B60N 2/56

(54) **SIÈGE DE VÉHICULE ET ÉLÉMENT DE SIÈGE COMPRENANT UN SYSTÈME DE VENTILATION ERGONOMIQUE**
FAHRZEUGSITZ UND SITZELEMENT, DAS EIN ERGONOMISCHES BELÜFTUNGSSYSTEM UMFASST
VEHICLE SEAT AND SEAT ELEMENT COMPRISING AN ERGONOMIC VENTILATION SYSTEM

(30) Priorité: 30.11.2016 FR 1661729
(43) Date de publication de la demande: 06.06.2018
(73) Titulaire: FAURECIA Sièges d'Automobile, 92000 Nanterre (FR)
(72) Inventeur: BOQUET, Mathieu, 91370 Verrieres Le Buisson (FR); LONGATTE, Florent, 78120 Rambouillet (FR); DURIEZ, Didier, 91220 Le Plessis-Pâté (FR); CHABERT, Laurent, 91590 Cerny (FR); BHOR, Sandeep, 411044 Nigdi Pradhikaran, Pune (IN); DESAI, Izajmahamad, 416218 Tal. Kagal (IN); LY, Stéphane, Shanghai (CN)
(74) Mandataire: Plasseraud IP

(56) Documents cités:
- EP-A2- 2 404 527
- EP-A2- 2 511 128
- WO-A1-2016/106619
- DE-A1- 3 306 871
- DE-A1- 19 830 797
- DE-A1-102010 012 212
- FR-A1- 2 694 527
- FR-A1- 2 829 728
- US-A1- 2011 187 165

## Description

L'invention concerne les éléments de sièges de véhicule, les sièges de véhicules qui comportent de tels éléments et les procédés de fabrication de ces éléments.

Généralement, un élément de siège comprend une structure porteuse, par exemple une armature mécanique, et une matelassure. La structure porteuse est structurellement rigide et assure la stabilité mécanique de l'élément de siège tandis que la matelassure, moelleuse le plus souvent, assure le confort d'un utilisateur assis sur l'élément de siège.

En outre, l'élément de siège peut comprendre un système de ventilation en communication avec la matelassure par l'intermédiaire d'un ou plusieurs conduits. Ainsi, le ventilateur est apte à souffler ou à aspirer de l'air d'un habitacle du véhicule, à travers la matelassure. Le ou les conduits sont formés en un matériau plastique dur et rigide pour des raisons de résistance mécanique. Mais en conséquence, le confort fourni par l'élément de siège est altéré. En effet, le ou les conduits ont tendance à s'opposer à l'enfoncement de la matelassure par l'utilisateur assis. L'utilisateur ressent alors le ou les conduits.

L'alternative la plus répandue est de remplacer le ou les conduits par une entretoise en tricot, appelée aussi « maille 3D », plus souple que le ou les conduits rigides. Cependant, la structure même de cette entretoise, réalisée en tricot, entraîne une résistance à l'air plus importante que dans un conduit, et donc une réduction du débit d'air. Il faut donc fournir plus d'énergie au ventilateur pour un rendement équivalent à celui obtenu avec le ou les conduits. Le document WO 2016/106619 A1 divulgue un élément de siège comprenant une structure porteuse, une matelassure reposant sur la structure porteuse et configurée pour servir d'appui à un utilisateur et un système de ventilation comportant au moins un ventilateur et au moins un conduit mettant en communication la matelassure et le ventilateur, le conduit étant formé en un matériau souple.

Un objectif de l'invention est de pallier les deux inconvénients précités, à savoir garantir le confort de l'utilisateur assis dans le siège tout en assurant une bonne perméabilité à l'air.

Pour ce faire, on prévoit selon l'invention, un élément de siège avec les caractéristiques de la revendication 1.

On notera que lorsque l'élément de siège est une assise, le matériau souple comprend de préférence l'éthylène-propylène-diène monomère (EPDM) et/ou le butadiène-acrylonitrile (NBR). Lorsque l'élément de siège est un dossier, le matériau souple comprend de préférence la mousse en polyoléfine qui comporte avantageusement du polyéthylène expansé. Le matériau peut aussi comporter une matière non-tissé thermoformée. Un tel matériau présente un compromis adéquat entre rigidité et souplesse.

Ainsi, le conduit, formé en un matériau souple, est apte à se déformer élastiquement lorsque l'utilisateur exerce une pression sur la matelassure. En outre, le matériau souple a pour propriété d'absorber les vibrations mécaniques produites par le ventilateur lorsque celui-ci est fixé directement sur le conduit. Ainsi, le confort ressenti par l'utilisateur de l'élément de siège est accru. De plus, le système de ventilation de l'élément de siège, et donc par suite l'élément de siège, sont plus simples à fabriquer et à mettre en forme. Dans divers modes de réalisation de l'élément de siège selon l'invention, on peut éventuellement avoir recours en outre à l'une et/ou à l'autre des dispositions suivantes :
- le conduit présente une forme en « U » ou en « C » ; la forme du conduit est ainsi adaptée, particulièrement lorsque l'élément de siège forme une assise, à la morphologie de l'utilisateur ;
- le conduit présente une section non constante sur sa longueur, ladite section non constante étant adaptée pour qu'une vitesse de déplacement de l'air le long du conduit soit uniforme le long du conduit ;
- le conduit comprend des moyens de fixation pour fixer le ventilateur ;
- le système de ventilation comprend un organe de protection qui entoure le ventilateur qui est formée en un matériau souple, de préférence le même matériau souple que le conduit ;
- le conduit et l'organe de protection sont venus de matière ;
- au moins une portion du conduit s'étend le long d'un pourtour périphérique de l'élément de siège ;
- le conduit est disposé symétriquement par rapport à un axe de symétrie de l'élément de siège qui est de préférence un axe longitudinal de l'élément de siège ;
- le ventilateur est fixé à une zone centrale de la structure porteuse ;
- le conduit débouche vers une zone périphérique de l'élément de siège ;
- l'élément de siège forme une assise ;
- l'élément de siège forme un dossier ;

On prévoit en outre selon l'invention un siège comportant au moins un élément de siège tel que décrit ci-dessus.

On prévoit enfin selon l'invention un procédé de fabrication d'un élément de siège tel que susmentionné, comprenant au moins les étapes suivantes :
- le conduit est positionné dans un moule et,
- on injecte un matériau dans le moule de façon à former la matelassure autour du conduit.

Par ailleurs, le ventilateur peut être fixé directement au conduit, par exemple préalablement à l'injection du matériau dans le moule. Il peut aussi être fixé sur la structure porteuse du siège.

Alternativement, le procédé de fabrication comprend au moins les étapes suivantes :
- on forme la matelassure dans laquelle on ménage une cavité,
- on positionne le conduit dans la cavité, et
- on fixe, avantageusement par collage, une toile recouvrant le conduit sur la matelassure.

De même, le ventilateur peut être fixé directement au le conduit ou à la structure porteuse du siège.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant deux modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue en perspective d'un système de ventilation pour un élément de siège, en l'occurrence une assise, selon un premier mode de réalisation de l'invention,
- la figure 2A est une vue en perspective des positions relatives d'un dos d'un utilisateur d'un élément de siège, en l'occurrence un dossier, et d'un conduit d'une variante du système de ventilation équipant l'élément de siège,
- la figure 2B est une vue en perspective du conduit de la figure 2A,
- la figure 3 est une vue en perspective d'un élément de siège, en l'occurrence une assise, comprenant le système de ventilation intégré dans une matelassure d'assise,
- les figures 4A à 4C sont des illustrations schématiques du système de ventilation et d'un utilisateur assis sur l'élément de siège,
- la figure 5 est une vue de dos d'un élément de siège, en l'occurrence un dossier, selon un second mode de réalisation, et
- la figure 6 est une vue de face de l'élément de siège.

Par souci de clarté, seuls les éléments utiles à la compréhension des modes de réalisation décrits ont été représentés et seront détaillés.

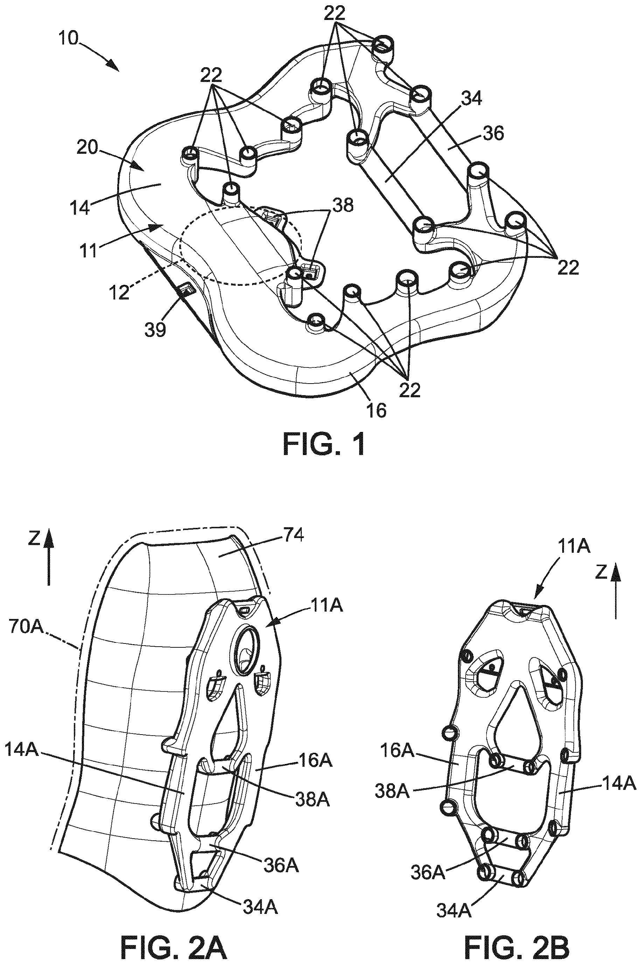

On a représenté à la figure 1 un système de ventilation 10 pour un élément de siège selon un premier mode de réalisation de l'invention.

Le système de ventilation 10 comprend un organe principal qui forme un conduit 11 et un ventilateur 12 (dont l'emplacement est matérialisé). Le conduit 11 comprend, à proximité de l'emplacement pour le ventilateur 12, deux oreilles de fixation 38 et un point d'empiochage 39. Le ventilateur 12 comprend trois organes complémentaires respectivement des deux oreilles 38 et du point d'empiochage 39 et est ainsi fixé au conduit 11.

Les deux oreilles de fixation 38 et le point d'empiochage 39 du conduit 11 forment donc des moyens de fixation pour fixer le ventilateur 12 au conduit 11.

Le conduit 11 présente une forme en « C » ou en « U ». Il comprend une branche gauche 14 et une branche droite 16, symétriques et qui forment chacune une branche du « C » ou du « U ». Les branches 14 et 16 sont symétriquement disposées de part et d'autre du ventilateur 12.

Le conduit 11 est formé en un matériau souple. Dans ce mode de réalisation, le matériau souple est un élastomère, à savoir de l'éthylène-propylène-diène monomère également connu sous l'acronyme EPDM. En variante, le matériau souple est du butadiène-acrylonitrile, également connu sous l'acronyme NBR. Plus généralement, le matériau souple peut être tout type d'élastomère synthétique ou naturel, en particulier un caoutchouc.

En outre, les branches 14 et 16 comportent chacune une pluralité d'orifices respectivement 22. Les orifices 22 mettent en communication de fluide l'intérieur et l'extérieur du conduit 11. En conséquence, le ventilateur 12 est en communication, par l'intermédiaire des branches 14 et 16, avec l'extérieur du conduit 11.

Comme illustré sur la figure 1, les branches 14 et 16 ont une extrémité à proximité immédiate du ventilateur 12 et une extrémité la plus éloignée du ventilateur. Ces deux extrémités sont reliées structurellement par deux liens mécaniques 34, 36 qui ont pour fonction d'améliorer la tenue mécanique du conduit 11, notamment lors de la manutention et pour une meilleure intégration dans un moule pour former une matelassure comme décrit plus loin.

En outre, comme on le voit sur la figure 1, les branches 14 et 16 du conduit 11 ont une section transversale non constante et donc de dimension variable. Cette section est plus importante à proximité du ventilateur et décroit progressivement en fonction du nombre des orifices 22 et de leurs positions et dimensions sections respectives. Cette variation de section est optimisée sur le plan aéraulique de façon à ce que la vitesse de déplacement de l'air le long du conduit 11, dans les branches 14 et 16 est sensiblement uniforme.

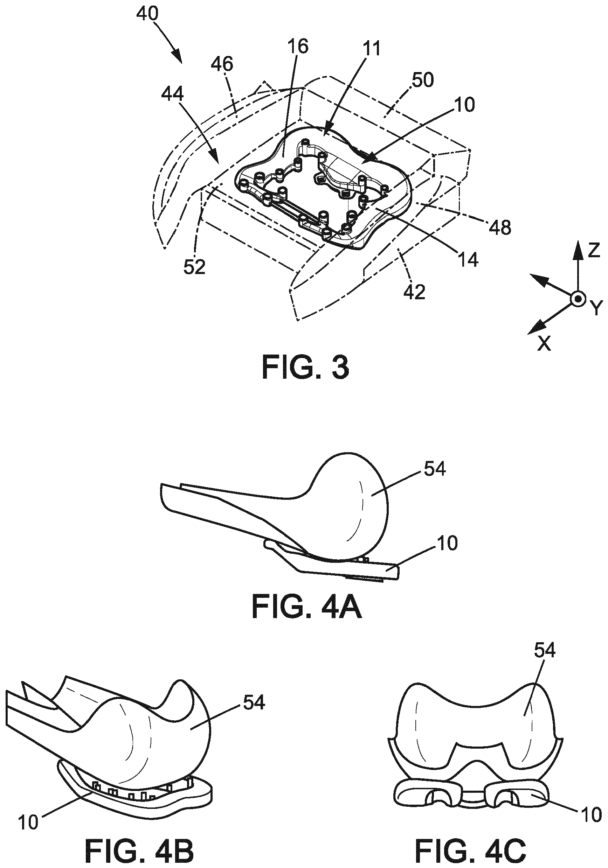

On a représenté à la figure 3 un élément de siège selon le premier mode de réalisation de l'invention. L'élément de siège est ici une assise 40 comprenant le système de ventilation 10. L'assise 40 est destinée à faire partie d'un siège de véhicule.

L'assise 40 comprend une structure porteuse 42, une matelassure 44 et le système de ventilation 10 formé notamment par le conduit 11 et le ventilateur 12. L'assise 40 présente un axe longitudinal (X) qui est parallèle à un axe longitudinal du véhicule lorsque l'assise 42 y est montée et un axe transversal (Y). Comme on le voit sur la figure 3, l'assise 42 présente un axe de symétrie qui est parallèle à l'axe longitudinal (X).

La structure porteuse 42 confère à l'assise 40 le maintien structurel nécessaire. En outre, la structure porteuse 42 est apte à être reliée à un plancher d'habitacle du véhicule, par exemple par l'intermédiaire de glissières. La structure porteuse 42 peut être de tout type et peut notamment comprendre une armature métallique.

La matelassure 44 assure le confort à un utilisateur de l'assise 40. Elle est configurée pour servir d'appui à l'utilisateur. La matelassure 44 repose en effet sur la structure porteuse 42. Elle comprend notamment une couche de mousse synthétique souple et amortissante. Elle comporte deux portions transversales 46 et 48, appelées bourrelés, une portion arrière 50 et une portion principale 52 qui relie les portions 46, 48 et 50.

Le système de ventilation 10 est intégré dans la portion principale 52. Les orifices 22 des branches 14 et 16 sont disposés à proximité de la surface supérieure, en référence à une direction verticale (Z), de la portion principale 52 de la matelassure 44. Ainsi, les branches 14 et 16 mettent en communication la matelassure 44 et le ventilateur 12. Les deux branches 14, 16 sont de plus disposées symétriquement par rapport à l'axe de symétrie de l'assise 40. En outre, la coiffe (non représenté sur la figue 3), qui contribue à envelopper la matelassure 44 est perméable à l'air. Ainsi, le ventilateur 12 peut insuffler de l'air à travers une coiffe perméable à l'air recouvrant la matelassure 44 ou a contrario aspirer de l'air à travers la coiffe et ce, afin d'améliorer le confort de l'utilisateur. En outre, comme illustré sur la figure 4, la forme générale en « C » ou en « U » des branches 14 et 16 leur permet d'être disposés à proximité respectivement des portions transversales 48, 46.

Les orifices 22 forment des entrées et/ou des sorties d'air. Ainsi, selon l'objectif recherché, le ventilateur 12 peut être configuré pour aspirer de l'air de l'assise 40 ou au contraire pour insuffler de l'air dans l'assise 40.

On a représenté aux figures 4A à 4C, de façon schématique, un bassin 54 de l'utilisateur et sa position par rapport au système de ventilation 10 lorsque l'utilisateur est assis sur l'assise 40. Du fait de la forme en « C » ou en « U » des branches 14 et 16, celles-ci vont venir épouser le bassin 54 de l'utilisateur. En effet, comme illustré schématiquement, la forme en « C » ou en « U » des deux branches 14, 16 permet au système de ventilation 10 de former un siège. Ainsi, l'utilisateur ressent plus de confort. En outre, cette forme en « C » et en « U » ainsi que la pluralité d'orifices permettent d'optimiser la circulation de l'air dans la coiffe et donc d'améliorer la qualité de la ventilation.

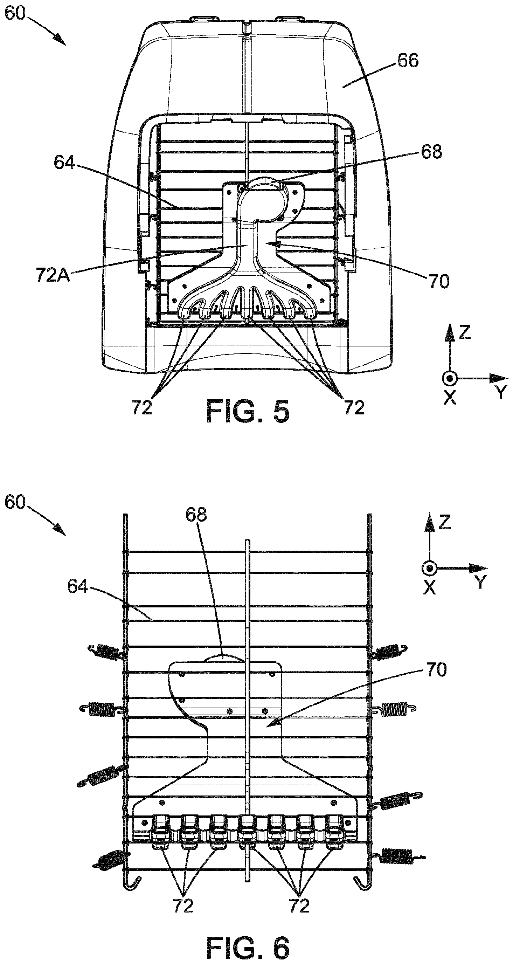

On a représenté aux figures 5 et 6 un élément de siège comprenant un système de ventilation 62 selon un second mode de réalisation. Seules les différences par rapport au premier mode vont être explicitées.

L'élément de siège est ici un dossier 60. Il comprend également une structure porteuse 64 et une matelassure 66. On a représenté aux figures 5 et 6 trois directions de l'espace : la direction longitudinale (X), la direction transversale (Y) et la direction verticale (Z). Ces trois directions sont les mêmes que celles utilisées pour décrire l'assise 40. Le dossier 60 est donc représenté en position d'utilisation. En figure 5, le dossier 60 est représenté vu de dos. Une partie de la matelassure 66 a été omise afin d'illustrer le système de ventilation 62. De nouveau, le système de ventilation 62 est intégré dans la matelassure 66. En figure 6, le dossier est représenté vu de face, mais la matelassure 66 a été totalement omise à des fins de clarté.

Le système de ventilation 62 comprend un ventilateur 68, protégé par un organe de protection 70 qui délimite une pluralité de conduits 72. Ainsi, l'organe de protection 70 et les conduits 72 sont venus de matière. Ces conduits 72 mettent en communication le ventilateur 68 et la matelassure 66. L'organe de protection 70, et donc les conduits 72, sont formés en un matériau souple qui peut notamment être en mousse polyoléfine thermoformée, qui peut notamment être du polyéthylène expansé, ou l'un des autres matériaux suscités. Le matériau souple peut aussi être une matière non-tissé thermoformée. Les conduits 72 comprennent une portion commune 72A, à proximité du ventilateur 68, et une portion propre qui débouche sur un orifice formant une entrée et/ou une sortie de fluide. En outre, le ventilateur 68 est fixé à une zone centrale de la structure porteuse 64, en référence notamment aux directions transversale (Y) et verticale (Z). Les conduits 72 débouchent en revanche vers une zone périphérique inférieure, en référence à la direction verticale (Z). Ils sont en revanche régulièrement répartis selon la direction transversale (Y).

On va maintenant décrire un procédé de fabrication de l'assise 40. Le procédé peut également être utilisé pour fabriquer le dossier 60.

Tout d'abord, on forme le conduit 11 en matière souple. Il peut être réalisé par injection, par soufflage ou encore par thermoformage d'un des matériaux souples suscités. Ensuite, on positionne le conduit 11 dans un moule afin de former la matelassure 44 tout autour du conduit 11. Puis, on injecte un matériau destiné à former la matelassure 44 dans le moule. Ensuite la matelassure 44 comprenant le conduit 11 est fixée à la structure porteuse 42. Le ventilateur est ensuite fixée au le conduit 11 au moyen des oreilles de fixation 38 et du point d'empiochage 39. Ces deux dernières étapes peuvent être inversées.

Alternativement, on forme initialement la matelassure 44 dans le moule en ménageant une cavité dans la matelassure 44. Puis, on positionne le conduit 11 dans la cavité de la matelassure 44. Le conduit 11 peut être collé à la matelassure 44 ou alors, on positionne le conduit 11 entre la cavité de la matelassure 44 et une toile elle-même collée à la matelassure 44.

Bien entendu, on pourra apporter à l'invention de nombreuses variantes sans sortir du cadre de celle-ci.

On pourra notamment varier le nombre d'orifices 22 d'entrées et/ou de sorties d'air ainsi que le nombre de branches 14, 16.

On pourra également positionner dans le dossier 60 un conduit qui présente une forme en « C » ou en « U » de façon à épouser le dos de l'utilisateur lorsque ce dernier est assis sur un siège qui comprend le dossier 60. On a illustré à la figure 2A cette configuration. Sur cette figure, on a représenté les positions relatives d'un conduit 11A, également illustré à la figure 2B seul, qui est une variante du conduit 11, et d'un dos 74 d'un utilisateur. Comme on le voit sur cette figure, le conduit 11A présente une branche gauche 14A et une branche droite 16A. Ces deux branches s'étendent longitudinalement dans la direction verticale (Z) de façon à épouser la forme du dos 74 de l'utilisateur. Ainsi, le confort ressenti par celui-ci est accru. Le conduit 11A se distingue du conduit 11 en ce qu'il comprend trois liens mécaniques 67A, 36A, 38A reliant les deux branches 14A, 16A.

## Revendications

1. Elément de siège (40) comprenant une structure porteuse (42), une matelassure (44) reposant sur la structure porteuse (42) et configurée pour servir d'appui à un utilisateur (54) et un système de ventilation (10) comportant au moins un ventilateur (12) et au moins un conduit (11, 11A) mettant en communication la matelassure (44) et le ventilateur (12), le conduit (11, 11A) étant formé en un matériau souple et présentant une section non constante sur sa longueur **caractérisé en ce que** le matériau souple comprend de préférence une mousse en polyoléfine et/ou de l'éthylène-propylène-diène monomère (EPDM) et/ou du butadiène-acrylonitrile (NBR) et/ou un non-tissé thermoformé, ladite section non constante étant adaptée pour qu'une vitesse de déplacement de l'air le long du conduit (11, 11A) soit uniforme le long du conduit (11, 11A), le conduit (11, 11A) comprend une pluralité d'orifices (22) formant des entrées et/ou des sorties de fluide et la section du conduit (11, 11A) est plus importante à proximité du ventilateur (12) et décroit progressivement en fonction du nombre des orifices (22) et de leurs positions et dimensions de sections respectives.

2. Elément de siège (40) selon la revendication précédente, dans lequel le conduit (11, 11A) présente une forme en « U » ou en « C ».

3. Elément de siège (40) selon l'une quelconque des revendications précédentes, dans lequel le conduit (11, 11A) comprend des moyens de fixation pour fixer le ventilateur (12).

4. Elément de siège (60) selon l'une quelconque des revendications précédentes, comprenant un organe de protection (70) qui entoure le ventilateur (68) et qui est formée en un matériau souple, de préférence le même matériau souple que le conduit (72), le conduit (72) et l'organe de protection (70) étant avantageusement venus de matière.

5. Elément de siège (40) selon l'une quelconque des revendications précédentes, formant une assise (40).

6. Elément de siège (60) selon l'une quelconque des revendications 1 à 2, formant un dossier (60).

7. Siège comportant au moins un élément de siège (40) selon l'une quelconque des revendications 1 à 6.

8. Procédé de fabrication d'un élément de siège (40) selon l'une quelconque des 1 à 7, comprenant au moins les étapes suivantes :
- le conduit (11, 11A) est positionné dans un moule et,
on injecte un matériau dans le moule de façon à former la matelassure (44) autour du condduit (11, 11A).

## Patentansprüche

1. Sitzelement (40), umfassend eine Tragstruktur (42), eine Polsterung (44), die auf der Tragstruktur (42) ruht und konfiguriert ist, um als Stütze für einen Benutzer (54) zu dienen, und ein Belüftungssystem (10), das mindestens einen Lüfter (12) und mindestens einen Kanal (11, 11A) umfasst, der die Polsterung (44) und den Lüfter (12) miteinander verbindet,
wobei der Kanal (11, 11A) aus einem flexiblen Material gebildet ist und einen entlang seiner Länge nicht konstanten Querschnitt aufweist,
**dadurch gekennzeichnet, dass** das flexible Material bevorzugt einen Polyolefinschaum oder/und Ethylen-Propylen-Dien-Monomer (EPDM) oder/und Butadien-Acrylnitril (NBR) oder/und ein thermogeformtes Vlies umfasst,
wobei der nicht konstante Querschnitt dazu angepasst ist, dass eine Bewegungsgeschwindigkeit der Luft entlang des Kanals (11, 11A) gleichmäßig entlang des Kanals (11, 11A) ist,
wobei der Kanal (11, 11A) mehrere Öffnungen (22) umfasst, die Einlässe oder/und Auslässe für Fluid bilden, und der Querschnitt des Kanals (11, 11A) in der Nähe des Lüfters (12) größer ist und in Abhängigkeit von der Anzahl der Öffnungen (22) und ihren Positionen und jeweiligen Querschnittsabmessungen nach und nach abnimmt.

2. Sitzelement (40) nach dem vorhergehenden Anspruch, wobei der Kanal (11, 11A) eine "U" - oder "C" -Form aufweist.

3. Sitzelement (40) nach einem der vorhergehenden Ansprüche,
wobei der Kanal (11, 11A) Befestigungsmittel zum Befestigen des Lüfters (12) umfasst.

4. Sitzelement (60) nach einem der vorhergehenden Ansprüche, umfassend ein Schutzelement (70), das den Lüfter (68) umgibt, und das aus einem flexiblen Material gebildet ist, vorzugsweise aus dem gleichen flexiblen Material wie der Kanal (72), wobei der Kanal (72) und das Schutzelement (70) vorteilhafterweise einstückig ausgebildet sind.

5. Sitzelement (40) gemäß einem der vorhergehenden Ansprüche, das eine Sitzfläche (40) bildet.

6. Sitzelement (60) nach einem der Ansprüche 1 bis 2, das eine Rückenlehne (60) bildet.

7. Sitz mit mindestens einem Sitzelement (40) nach einem der Ansprüche 1 bis 6.

8. Verfahren zur Herstellung eines Sitzelements (40) nach einem der Ansprüche 1 bis 7, umfassend mindestens die folgenden Schritte:
- der Kanal (11, 11A) wird in einer Form positioniert, und ein Material wird in die Form eingespritzt, um die Polsterung (44) um den Kanal (11, 11A) herum zu bilden.

## Claims

1. A seat element (40) comprising a supporting structure (42), a padding (44) resting on the supporting structure (42) and configured to act as a support for a user (54) and a ventilation system (10) including at least one fan (12) and at least one duct (11, 11A) communicating the padding (44) and the fan (12), the duct (11, 11A) being made of a flexible material and having a section which is non-constant over its length **characterised in that** the flexible material preferably comprises a polyolefin foam and/or ethylene-propylene-diene monomer (EPDM) and/or butadiene-acrylonitrile (NBR) and/or a thermoformed non-woven fabric, said non-constant section being adapted so that a speed of movement of the air along the duct (11, 11A) is uniform along the duct (11, 11A), the duct (11, 11A) comprises a plurality of orifices (22) forming fluid inlets and/or outlets and the section of the duct (11, 11A) is larger in the proximity of the fan (12) and gradually decreases depending on the number of orifices (22) and their positions and dimensions of respective sections.

2. The seat element (40) according to the preceding claim, wherein the duct (11, 11A) has a "U" or "C" shape.

3. The seat element (40) according to any one of the preceding claims, wherein the duct (11, 11A) comprises fastening means for fastening the fan (12).

4. The seat element (60) according to any one of the preceding claims, comprising a protective member (70) which surrounds the fan (68) and which is formed of a flexible material, preferably the same flexible material as the duct (72), the duct (72) and the protective member (70) advantageously being integral.

5. The seat element (40) according to any one of the preceding claims, forming a seat (40).

6. The seat element (60) according to any one of claims 1 to 2, forming a backrest (60).

7. The seat including at least one seat element (40) according to any one of claims 1 to 6.

8. A method for manufacturing a seat element (40) according to any one of claims 1 to 7, comprising at least the following steps:
- the duct (11, 11A) is positioned in a mould and a material is injected into the mould so as to form the padding (44) around the duct (11, 11A).
